# EUROPEAN PATENT APPLICATION

(11) **EP 1 964 810 A2**
(43) Date of publication of application: **03.09.2008**
(21) Application number: 08150420.1
(22) Date of filing: 18.01.2008
(51) Int. Cl.: C01B 3/52, C01B 3/56

(54) **Hydrogen, carbon monoxide, and N2 recovery from Low BTU gases**

(30) Priority: 19.12.2007 US 960009; 29.01.2007 US 886999 P
(71) Applicant: L'AIR LIQUIDE, Société Anonyme pour l'Etude et l'Exploitation des Procédés Georges Claude, 75321 Paris Cedex 07 (FR)
(72) Inventor: Grover, Bhadra S., Sugar Land, TX 77479 (US); Vauk, Dennis A, Houston, TX 77095 (US)
(74) Representative: Conan, Philippe Claude

(57) **Abstract**

A process for recovering hydrogen from a multi-component gas stream is provided. This process includes compressing said multi-component gas stream, thereby creating a compressed multi-component gas stream. This process includes heating the compressed multi-component gas stream, thereby creating a heated compressed multi-component gas stream. This process also includes introducing stream into the heated compressed multi-component gas stream, thereby creating a first feed stream. This process further includes introducing the first feed stream into a CO shift conversion process, thereby creating a first intermediate stream. This process also includes introducing the first intermediate stream into an amine wash process, thereby creating a second intermediate stream and a carbon dioxide stream. This process also includes introducing the second intermediate stream into a methanation process, thereby creating a third intermediate stream. This process also includes introducing the third intermediate stream into an adsorbent bed to remove moisture, thereby creating a fourth intermediate dry stream. This process also includes introducing the fourth intermediate stream into a cryogenic distillation process, thereby creating a hydrogen stream, a nitrogen stream, and a waste stream.

## Description

Some processes such as the Flexi Coker process produce a low BTU (1 BTU = 1,054-1,060 Joules) gas that has 40% to 60% inert gases such as nitrogen and carbon dioxide. This gas typically also contains desirable gases such as hydrogen and carbon monoxide. However, the recovery of hydrogen and carbon monoxide from such gases has not been found to be economical. Often, this low BTU gas has been used as fuel in heaters and boilers. The presence of such high levels of inert gases makes the resulting combustion of this gas very inefficient, as a large percentage of the resulting heat is lost as waste heat in the flue gas that exits via the stack. The presence of such a high concentration of nitrogen also tends to create oxides of nitrogen (NOx) which is environmentally harmful.

There are no known solutions for separating the desirable gases from the undesirable gases in such a stream, which are economically viable. Obvious solutions are to use either membrane technology or pressure swing absorber technology. However, since the source of the low BTU gas is usually at a low pressure, it would typically have to be compressed to between about 20 bar and 60 bar (1 bar = 10⁵ Pa) to be processed through either a PSA or a typical membrane-type separator. This compression brings with it a high compression power cost, which makes such a solution unattractive. Ordinary PSA and membrane technologies are also only capable of recovering hydrogen. And, typically the hydrogen recovery will be rather small and the size of the units will need to be rather large to handle such a large volume of inert gases. Consequently, it is not possible to effectively separate nitrogen, carbon monoxide, and methane in these processes.

Hence, there is a general need in society for a method and system for economically separating hydrogen, nitrogen, carbon monoxide, and methane from such low BTU gases. The present solution uses cryogenic fractionation to perform such separation, typically at a pressure of about 4 bars to about 8 bars. The preconditioning of the feed is another feature of the present solution.

In one aspect of the present invention, a process for recovering hydrogen from a multi-component gas stream is provided. This process includes compressing said multi-component gas stream, thereby creating a compressed multi-component gas stream. This process also includes introducing said first feed stream into an amine wash process for carbon dioxide removal, thereby creating a first intermediate stream and a carbon dioxide stream. This process also includes introducing said first intermediate stream into an adsorbent bed to remove moisture, thereby creating a second intermediate dry stream. This process also includes introducing said second intermediate dry stream into a cryogenic distillation process, thereby creating a hydrogen stream, a nitrogen stream, a carbon monoxide stream, and a waste stream.

That is why, according to a first embodiment, the invention relates to a process for recovering hydrogen from a multi-component gas stream comprising the following steps:
Step a: Compressing said multi-component gas stream, thereby creating a compressed multi-component gas stream;
Sept b: Introducing said first feed stream into an amine wash process for carbon dioxide (CO₂) removal, thereby creating a first intermediate stream and a carbon dioxide stream;
Step c: Introducing said first intermediate stream into an adsorbent bed to remove moisture, thereby creating a second intermediate dry stream;
Step d: Introducing said second intermediate dry stream into a cryogenic distillation process, thereby creating a hydrogen stream, a nitrogen stream, a carbon monoxide stream, and a waste stream.

According to several more specific embodiments of the process as hereinabove defined, said process further comprises one, several or all of the following characteristics:
- Said compressed multi-component gas stream has a pressure of between about 20 psig and about 1500 psig and more specifically between about 50 psig and about 100 psig (At sea level on Earth, 30 psig represents an absolute pressure of about 44.70 psi; 1 psi = about 6,895 Pa)
- Said CO₂ removal is done by other known solvents;
- Said waste stream comprises at least one component selected from the group consisting of hydrocarbons, hydrogen, carbon monoxide, and nitrogen. According to a more specific embodiment, said hydrocarbons are selected from the group consisting of methane and ethane;
- The hereinabove defined process further comprises a purification step (Step e), prior to said compression of Step a, wherein hydrogen sulfide is removed from said multi-component gas stream;
- Said cryogenic distillation process of Step d, obtains at least part of the required refrigeration from an external source, with the balance of said refrigeration coming from the expansion of said waste stream.

In another embodiment of the present invention, a process for recovering hydrogen from a multi-component gas stream is provided. This process includes compressing said multi-component gas stream, thereby creating a compressed multi-component gas stream. This process includes heating said compressed multi-component gas stream, thereby creating a heated compressed multi-component gas stream. This process also includes introducing stream into said heated compressed multi-component gas stream, thereby creating a first feed stream. This process further includes introducing said first feed stream into a carbon monoxide shift conversion process, thereby creating a first intermediate stream. This process also includes introducing said first intermediate stream into an amine wash process, thereby creating a second intermediate stream and a carbon dioxide stream. This process also includes introducing said second intermediate stream into a methanation process, thereby creating a third intermediate stream. This process also includes introducing said third intermediate stream into an adsorbent bed to remove moisture, thereby creating a fourth intermediate dry stream. This process also includes introducing said fourth intermediate stream into a cryogenic distillation process, thereby creating a hydrogen stream, a nitrogen stream, and a waste stream.

That is why according to another embodiment, the invention relates to a process for recovering hydrogen from a multi-component gas stream comprising the following steps:
Step a1: Compressing said multi-component gas stream, thereby creating a compressed multi-component gas stream;
Step a2: Heating said compressed multi-component gas stream, thereby creating a heated compressed multi-component gas stream;
Step a3: Introducing stream into said heated compressed multi-component gas stream, thereby creating a first feed stream;
Step a4: Introducing said first feed stream into a CO shift conversion process, thereby creating a first intermediate stream;
Step b1: Introducing said first intermediate stream into an amine wash process, thereby creating a second intermediate stream and a carbon dioxide stream;
Step b2: Introducing said second intermediate stream into a methanation process, thereby creating a third intermediate stream;
Step c1: Introducing said third intermediate stream into an adsorbent bed to remove moisture, thereby creating a fourth intermediate dry stream; and
Step d1 : Introducing said fourth intermediate stream into a cryogenic distillation process, thereby creating a hydrogen stream, a nitrogen stream, and a waste stream.

According to several more specific embodiments of the process as hereinabove defined, said process further comprises one, several or all of the following characteristics:
- Said compressed multi-component gas stream has a pressure of between about 20 psig and about 1500 psig and more specifically between about 50 psig and about 100 psig;
- Said waste stream comprises at least one component from the group consisting of methane, hydrogen and nitrogen;
- Said CO shift conversion process generates useful heat, and wherein said heat is used to generate at least a portion of said steam;
- Said CO shift conversion is done in multiple stages with intermediate heat recovery;
- The hereinabove defined process further comprises a purification step (Step e1, prior to said compression of Step a1, wherein hydrogen sulfide is removed from said multi-component gas stream;
- Said cryogenic distillation process of Step d1, obtains at least part of the required refrigeration from an external source, with the balance of said refrigeration coming from the expansion of said waste stream.

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

This invention applies to the recovery of hydrogen, carbon monoxide, or a combination of the two, from a low BTU fuel such as the coke gas product of a flexi Coker. Off-gases such as this typically contain between 40% and 60% inert gases such as nitrogen or carbon dioxide. The removal of these inert gases by conventional methods is not economical. If this low BTU gas is burned in utility boilers or heaters, the thermal efficiency of the system suffers due to the heating and subsequent discarding of these inert gases.

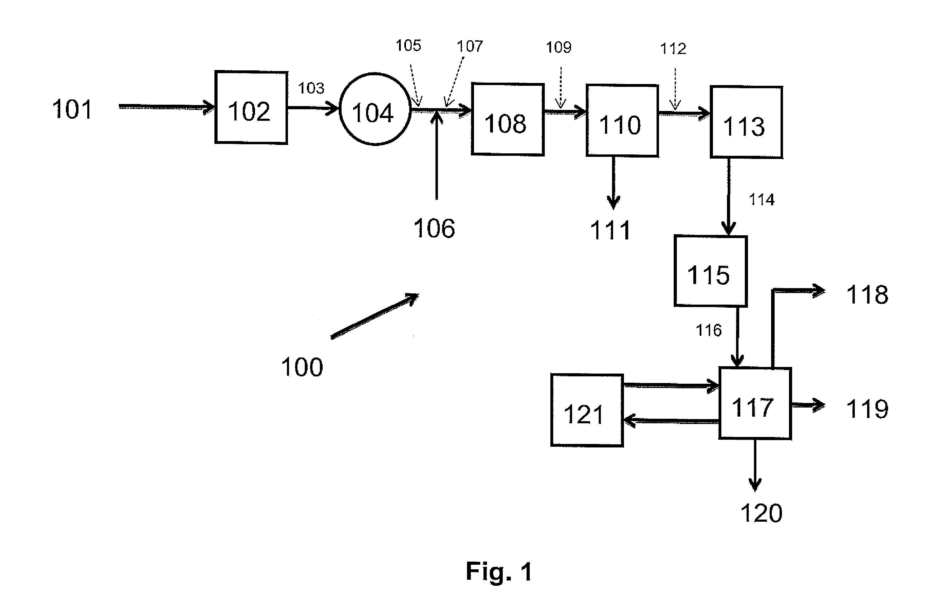

One embodiment of the present invention, system **100,** is described in the sole Figure (Figure1). In this particular case the desired products are hydrogen, nitrogen, and carbon dioxide. The off-gas containing these desired products is multi-component gas stream **101.** Stream **101** is typically at a low pressure such as about 15 psig. Low pressure stream **101** is compressed in compression means **102** to a pressure of approximately 20 psig to 1500 psig, preferably between about 50 psig to 100 psig, thereby resulting in compressed multi-gas stream **103.** Compression means **102** may be any such means known to the skilled artisan. Compressed multi-gas stream **103** now may be heated, thereby resulting in heated compressed multi-component gas stream **105.** Steam **106** is combined with heated compressed multi-component gas stream **105,** resulting in a first feed stream **107.**

First feed stream **107** is then introduced into a CO shift conversion reactor **108,** thereby resulting in first intermediate stream **109.** Within CO shift conversion reactor **108** the carbon monoxide that is present is shifted to hydrogen and carbon dioxide. This shift may be done in a single stage, or in multiple stages in order to optimize the conversion process itself and the size of the reactor. Said first intermediate stream **109** is then introduced into amine wash system **110,** wherein any carbon dioxide is washed off, thereby resulting in second intermediate stream **112** and carbon dioxide stream **111.**

Said second intermediate stream **112** is then introduced into methanator **113,** wherein any residual carbon monoxide and carbon dioxide is eliminated, thereby resulting in third intermediate stream **114.** Third intermediate stream **114** is then introduced into adsorbent bed **115,** wherein any moisture that may be present is removed. This results in fourth intermediate dry stream **116.** Fourth intermediate dry stream **116,** which consists primarily of hydrogen, nitrogen and methane, is then introduced into a cryogenic distillation column **117.** This can be any cryogenic distillation column design known to the skilled artisan. This results in the separation of hydrogen stream **118,** nitrogen stream **119,** and waste stream **120.** Waste stream **120** consists primarily of methane with some hydrogen and nitrogen present. Should additional refrigeration be required by cryogenic distillation column **117,** it may be provided by external refrigeration source **121.**

In another embodiment, if carbon monoxide is a desired product, then CO Shift conversion reactor **108** and methanator **113** may be eliminated. This will required the design of cryogenic distillation column **117** to be modified to account for the carbon monoxide (CO) as a product.

In another embodiment, the heat that is generated by CO shift conversion reactor **108** may be used to generate steam **106,** thereby reducing the amount of stream that must be imported into the cycle. In another embodiment additional purification steps may be required to remove hydrogen sulfide (H₂S) that may be present upstream of CO Shift conversion reactor **108.**

## Claims

1. Process for recovering hydrogen from a multi-component gas stream comprising the following steps:
Step a: Compressing said multi-component gas stream, thereby creating a compressed multi-component gas stream;
Sept b: Introducing said first feed stream into an amine wash process for carbon dioxide (CO₂) removal, thereby creating a first intermediate stream and a carbon dioxide stream;
Step c: Introducing said first intermediate stream into an adsorbent bed to remove moisture, thereby creating a second intermediate dry stream;
Step d: Introducing said second intermediate dry stream into a cryogenic distillation process, thereby creating a hydrogen stream, a nitrogen stream, a carbon monoxide stream, and a waste stream.

2. Process according to Claim 1, wherein said waste stream comprises at least one component selected from the group consisting of hydrocarbons, hydrogen, carbon monoxide, and nitrogen.

3. Process according to Claim 1, wherein said hydrocarbons are selected from the group consisting of methane and ethane;

4. Process according to one of Claims 1 to 3, further comprising a purification step (Step e), prior to said compression of Step a, wherein hydrogen sulfide is removed from said multi-component gas stream;

5. Process according to one of Claims 1 to 4, wherein said cryogenic distillation process of Step d, obtains at least part of the required refrigeration from an external source, with the balance of said refrigeration coming from the expansion of said waste stream.

6. Process for recovering hydrogen from a multi-component gas stream comprising the following steps:
Step a1: Compressing said multi-component gas stream, thereby creating a compressed multi-component gas stream;
Step a2: Heating said compressed multi-component gas stream, thereby creating a heated compressed multi-component gas stream;
Step a3: Introducing stream into said heated compressed multi-component gas stream, thereby creating a first feed stream;
Step a4 : Introducing said first feed stream into a CO shift conversion process, thereby creating a first intermediate stream;
Step b1 : Introducing said first intermediate stream into an amine wash process, thereby creating a second intermediate stream and a carbon dioxide stream;
Step b2: Introducing said second intermediate stream into a methanation process, thereby creating a third intermediate stream;
Step c1 : Introducing said third intermediate stream into an adsorbent bed to remove moisture, thereby creating a fourth intermediate dry stream; and
Step d1: Introducing said fourth intermediate stream into a cryogenic distillation process, thereby creating a hydrogen stream, a nitrogen stream, and a waste stream.

7. Process according to Claim 6, wherein said waste stream comprises at least one component from the group consisting of methane, hydrogen and nitrogen;

8. Process according to Claim 6 or 7, further comprising a purification step (Step e1), prior to said compression of Step a1, wherein hydrogen sulfide is removed from said multi-component gas stream;

9. Process according to one of Claim 6 to 8, wherein said cryogenic distillation process of Step d1, obtains at least part of the required refrigeration from an external source, with the balance of said refrigeration coming from the expansion of said waste stream.
